Europäisches Patentamt

European Patent Office

Office européen des brevets

(11) Publication number: **0 442 355 A1**

# EUROPEAN PATENT APPLICATION

(21) Application number: 91101547.7

(22) Date of filing: 05.02.91

(51) Int. Cl.⁵: **B60R 11/02**

(30) Priority: 16.02.90 IT 5286990 U

(43) Date of publication of application:
21.08.91 Bulletin 91/34

(84) Designated Contracting States:
**AT DE ES FR GB IT NL SE**

(71) Applicant: **IVECO FIAT S.p.A.**
**Via Puglia 35**
**I-10156 Torino(IT)**

(72) Inventor: **Gamba, Enrico**
**Via Sagra S. Michele, 37**
**I-10100 Torino(IT)**
Inventor: **Benazzato, Giovanni**
**Corso Togliatti, 17**
**I-10093 Collegno(IT)**

(74) Representative: **Boggio, Luigi et al**
**STUDIO TORTA Società Semplice Via Viotti,**
**9**
**I-10121 Torino(IT)**

(54) **Internal cross member of a windscreen frame for a motor vehicle, in particular a commercial vehicle.**

(57) The cross member comprises a panel (18) provided with at least one opening (19) for a radio or two-way radio unit, which on one side (22) is pivoted about a pin (24) of the cross member, whereby it can be suitably pivoted towards the driver. On the opposite side (27), the panel (18) is provided with a circular flange (28) supported by a pair of rollers (33). The edge (29) of the flange (28) is provided with a series of notches (36) co-operating with a spring-loaded locating mechanism (37). A plurality of conical springs (48) can be mounted on the pin (24) so as to retain the panel (18) in position by friction, independently of the locating mechanism (37).

Fig.3

Fig.5

The present invention relates to an internal cross member of a windscreen frame for a motor vehicle, in particular a commercial vehicle.

It is known that commercial vehicles, for example buses, coaches or commercial vehicles for freight transport which are generally used for long and monotonous journeys, are always provided with a conventional opening for a radio set and/or sound reproduction unit, such as a cassette player, and with an opening for a two-way radio unit, for example of CB (City Band) type, for outside communication.

The known cross members of windscreen frames generally comprise a single rigid piece, whereas the aforementioned units are generally disposed in a central zone of the upper or lower cross member of the frame. These units comprise a panel with a series of visual indicators and control means which must be accessible to the driver when he is driving the vehicle. Since commercial vehicles are of substantial width this panel is situated at a distance from the driving position, whereby the driver cannot readily reach the panel by hand and, moreover, it is difficult for him to read the indicators.

It is the object of the present invention to devise a cross member of a windscreen frame which is extremely simple to manufacture and extremely efficient in use, thereby eliminating the above-mentioned disadvantages of the known cross members.

This object is achieved by the cross member of a windscreen frame in accordance with the invention, which comprises a panel provided with at least one opening able to accommodate a two-way radio unit, or a radio set and/or sound reproduction unit, and which is characterised in that said panel is separate from the cross member and is connected thereto by adjustable means so as to enable the driver to arrange said panel in a position which is accessible manually and visually from the driving seat.

With a view to a better understanding of the invention, a preferred form of embodiment of the cross member will be described below by way of example, with reference to the accompanying drawings, wherein:

Figure 1 is a front view of an internal upper cross member of the frame for a windscreen in accordance with the invention;

Figure 2 is a section taken along a line II-II in Figure 1;

Figure 3 is a detail of Figure 2, in a different position and on an enlarged scale;

Figure 4 is a section taken along a line IV-IV in Figure 3, on an enlarged scale;

Figure 5 is a section of a variant of a detail in Figure 3, also on an enlarged scale;

Figure 6 is a section taken along the line VI-VI in Figure 4, on an enlarged scale.

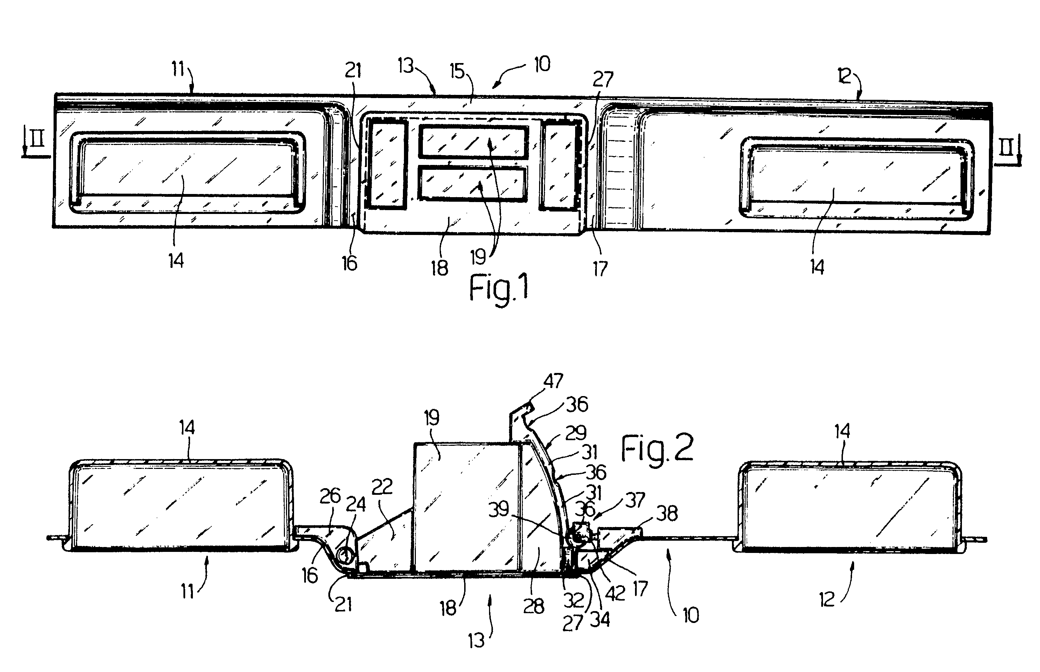

Referring now to Figure 1, the reference numeral 10 generally designates an internal upper cross member of a windscreen frame for a motor vehicle, preferably a commercial vehicle.

The cross member 10 comprises two lateral zones 11 and 12 and a central zone 13. In each of the two lateral zones 11 and 12 there is secured a compartment 14 (Figure 2) for holding documents or miscellaneous articles, which compartment can optionally be closed by a hinged cover. The two lateral zones 11 and 12 are rigidly connected to one another by an upper portion 15 (Figure 1) formed integrally with two uprights 16 and 17 disposed in the central zone 13.

A substantially rectangular panel 18, which is separate from the structure of the cross member 10, is disposed in the space bounded by the portion 15 and by the uprights 16 and 17. The panel 18 is provided with two vertically aligned openings 19. One of the two openings 19 is designed to accommodate the customary radio set and/or sound reproduction unit, for example a cassette player. The other opening 19 is designed to accommodate a two-way radio unit, for example of CB (City Band) type, which enables the driver to conduct outside communication.

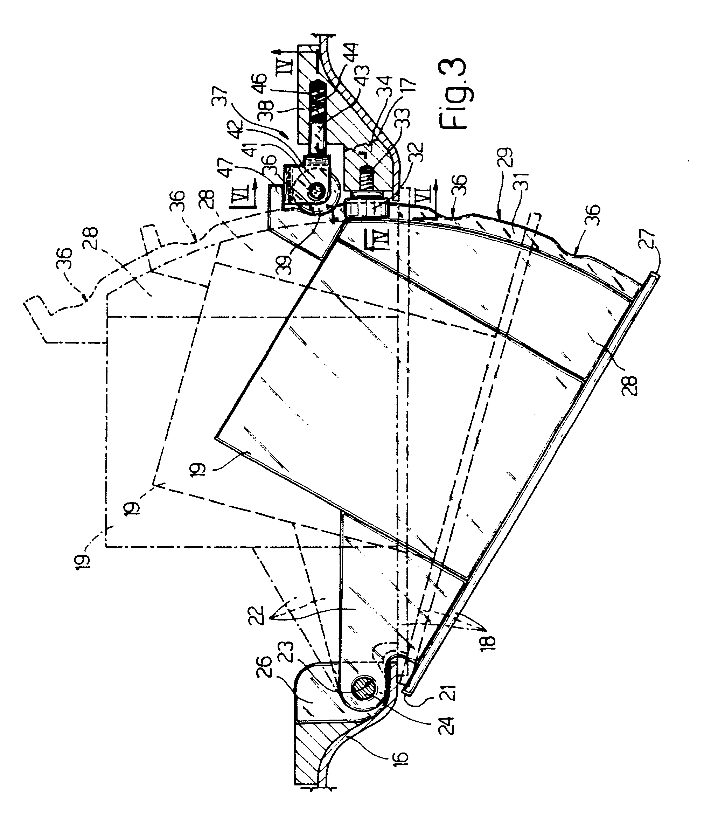

In association with the end 21 facing the driver, the panel 18 is provided with a block 22 which connects the panel 18 to the left-hand wall of the openings 19 and which is provided with a hole 23 (Figure 3). A pin 24, which is supported by a pair of projections 26 attached to the upright 16, engages in this hole 23. In association with its opposite end 27, the panel 18 is provided with a flange 28 which is perpendicular to the axis of the pin 24 and which connects the panel 18 to the right-hand wall of the openings 19.

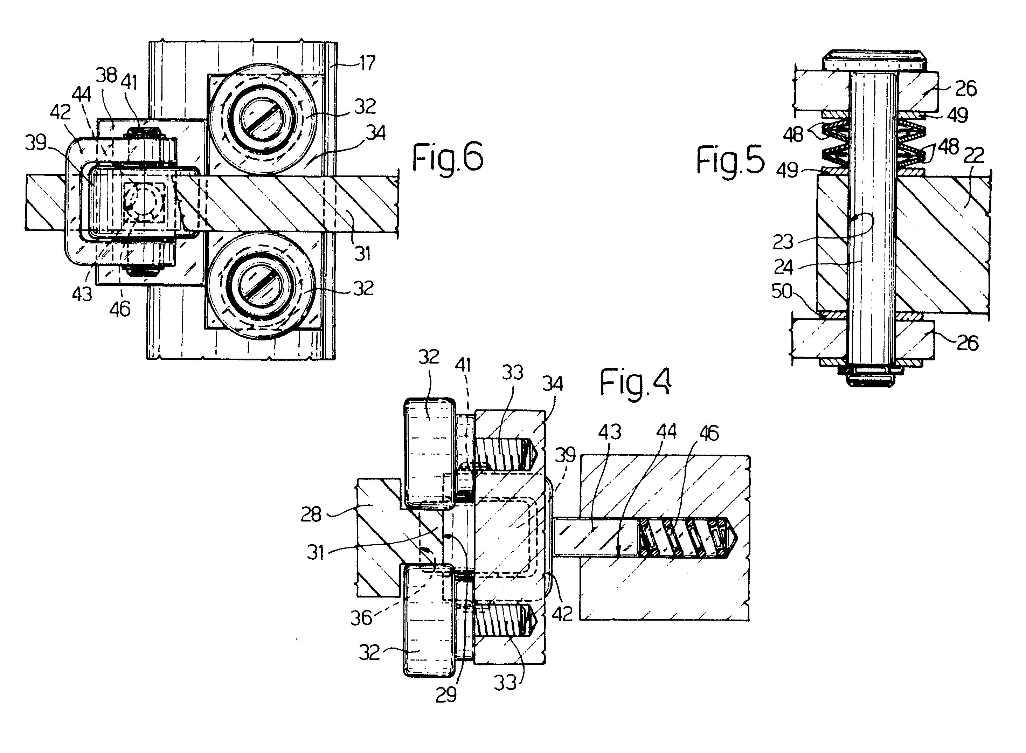

The flange 28 is of the shape of a segment of a circle, bounded by a circular outer edge 29. A strip 31 (Figure 4) of the flange 28 along the edge 29 is of reduced thickness and is guided by a pair of rollers 32 (Figure 6). These rollers are rotatable about two pins 33 substantially perpendicular to the pin 24 (Figure 3) and supported by a projection 34 attached to the upright 17.

The edge 29 of the flange 28 is provided with a series of locating notches (three in the embodiment shown). The notches 36 are arcuate in shape and can cooperate with a spring-loaded locating mechanism, generally designated 37, which is supported by another projection 38 attached to the upright 17. In particular, the locating mechanism 37 comprises a roller 39, of a diameter substantially equal to that of the notches 36, which is rotatable about a pin 41 carried by a support 42.

The support 42 is provided with a square bar 43 mounted in a seating 44 of the projection 38, which is disposed parallel to the two pins 33. The bar 43 can slide axially but cannot rotate in the seating 44. A compression spring 46 inserted in the seating 44 can urge the bar 43, and therefore the roller 39, towards the edge 29.

This edge is also provided with a projection 47 forming a limit stop for the panel 18.

After the driver has adjusted the position of the driving seat in longitudinal direction, to conform with his own somatic characteristics, he can adjust the pivotal setting of the panel 18 on the cross member 10. For this purpose, by gripping the lower edge of the panel 18 he causes the latter to rotate about the pin 24, overcoming the action of the spring 46 on the roller 39. This rotation is constrained to be arrested when the flange 28 is brought into registration with the roller 39 by one of its notches 36. The panel 18 is then located and held in the position reached by the roller 39, under the action of the spring 44, whereby it can be located only in a series of discrete positions.

In Figure 3 the position of the panel 18 shown in Figure 2 is indicated in chain line, i.e. parallel to the cross member 10, whereas the position of maximum rotation in clockwise direction about the pin 24 is indicated in solid line. The panel 18 is thus rotated through an angle of 30°, which is sufficient to ensure a comfortable pivotal setting even with the driving seat adjusted as far forward as possible.

According to the variant of Figure 5, a set of conical springs 48 is mounted on the pin 24 for rotation of the panel 18. These springs, which are suitably preloaded, are disposed between two washers 49 which consist of material having a high coefficient of friction and which are arranged in contact respectively with the block 22 of the panel 18 and with one of the projections 26 of the upright 16, for example the upper one. Another washer 50 of material having a high coefficient of friction is also disposed between the block 22 and the other projection 26.

The conical springs 48 generate via the washers 49 and 50 a high degree of friction opposed to the rotation of the block 22 relative to the projections 26, whereby the panel 18 is held in the position set in each case, independently of the action of the roller 39. Therefore, in this case, it is possible to dispense with the roller 39 and the notches 36. The driver can then adjust the pivotal setting of the panel 18 in a continuously variable manner so as to arrange the flange 28 in any position relative to the guide rollers 32.

The advantages of the above-mentioned cross member 10 with respect to the known cross members are evident from the foregoing.

Above all, the pivotal settability of the panel 18 (Figure 2) enables the radio set and two-way radio unit to be readily accessible, both manually and visually.

Moreover, the openings 19 for these units can be disposed at a distance from the driving position, leaving more room for the compartment 14 arranged above the driving position.

It is evident that the cross member 10 described above could undergo various modifications and improvements without departing from the scope of the invention, as described in the claims.

For example, the panel 18 could be mounted in such a way as to allow a certain amount of traversing movement parallel to the openings 19, and/or rotation about a horizontal pivot to effect vertical adjustment.

Furthermore, the panel 18 can be locked in the required position by safety locking means, such as screw-type clamping means, both in the case of adjustment in discrete positions and in the case of continuously variably adjusted positions.

**Claims**

1. An internal cross member of a windscreen frame for a motor vehicle, preferably a commercial vehicle, comprising a panel (18) provided with at least one opening (19) able to accommodate a two-way radio and/or radio or sound reproduction unit, characterised in that said panel (18) is separate from the cross member and is connected thereto by adjustable means (24, 28, 39) so as to enable the driver to arrange said panel (18) in a position which is accessible manually and visually from the driving seat.

2. A cross member according to Claim 1, characterised in that said panel (18) is substantially rectangular and is pivoted along one (21) of the ends of the rectangle about a pivot (24) supported by the cross member, the opposite side (27) of the rectangle being provided with a member (28) which can be held in an adjustable position by support means (32) carried by the cross member.

3. A cross member according to Claim 2, characterised in that said panel (18) is disposed in a central zone (13) of the cross member, and in that said opposite ends (21, 27) are substantially vertical, the end (21) adjacent to said pivot (24) being arranged on the driving position side, whereby said panel (18) can be pivoted variably towards the driver.

4. A cross member according to Claim 2 or 3, characterised in that said member comprises a flange (28)of the shape of a segment of a circle perpendicular to the axis of said pivot (24), said support means comprising a pair of rollers (32) rotating about two pins (33) substantially perpendicular to said pivot (24).

5. A cross member according to Claim 4, characterised in that said flange (28) is provided with a circular edge (29) provided with a series of notches (36) which can be engaged by a spring-loaded locating mechanism (37) mounted on the cross member.

6. A cross member according to Claim 5, characterised in that said spring-loaded locating mechanism (37) comprises a roller (39) rotating about a support (42) provided with a bar (43), said bar (43) being mounted in a seating (44) parallel to said pair of pins (33) and supported by the cross member in such a way as to be able to slide axially but not rotate in said seating, a spring (46) being disposed in said seating (44) to urge said roller (39) against said edge (29).

7. A cross member according to any one of Claims 2 to 6, characterised in that said pivot comprises a pin (24) inserted in a hole (23) in a block (22) of said panel (18) and in a hole in a projection (26) of the cross member, friction means (48, 49, 50) being provided between said block (22) and said projection (26) for firmly retaining said panel (18) by friction in a continuously variable adjustment position.

8. A cross member according to Claim 7, characterised in that said friction means (48, 49, 50) comprise a plurality of conical springs (48) mounted preloaded on said pin (24) between a pair of friction elements (49) in contact with said block (22) and said projection (26).

9. A cross member according to any one of the preceding Claims, which can be disposed on the upper side of the windscreen frame, characterised in that it is divided into three zones (11, 12 and 13), two lateral zones (11, 12) each being provided with a compartment (14) for holding miscellaneous articles, said panel (18) being disposed in the central zone (13) and being provided with two vertically aligned openings, one of which is designed to accommodate a two-way radio unit, whereas the other is designed to accommodate a radio and/or cassette player unit.

Fig.1

Fig.2

EP 0 442 355 A1

Fig. 3

Fig.5

Fig.4

Fig.6

European Patent Office

**EUROPEAN SEARCH REPORT**

Application Number

**EP 91 10 1547**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | PATENT ABSTRACTS OF JAPAN vol. 13, no. 76 (M-800)(3424) 21 February 1989, & JP-A-63 275443 (HITACHI LTD) 14 November 1988, * the whole document * | 1,2,3,9 | B 60 R 11/02 |
| X,A | EP-A-0 169 113 (REGIE NATIONALE DES USINES RE-NAULT) * claims 1-4; figures 1-4 * | 1,2,3,9 | |
| X,A | US-A-4 868 862 (KIMURA RYOICHI) * column 4, line 28 - column 5, line 15; figures 1-4 * | 1,2,3,9 | |

TECHNICAL FIELDS
SEARCHED (Int. Cl.5)

B 60 R
B 60 K

The present search report has been drawn up for all claims

| Place of search | Date of completion of search | Examiner |
|---|---|---|
| The Hague | 23 May 91 | D'SYLVA C.H.A. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document